# EUROPEAN PATENT SPECIFICATION

(11) **EP 4 134 534 B1**
(45) Date of publication and mention of the grant of the patent: **30.04.2025**
(21) Application number: 22190413.9
(22) Date of filing: 15.08.2022
(51) Int. Cl.: F02C 9/48, B64D 27/24, F02K 5/00

(54) **CONTROL FOR ELECTRICALLY ASSISTED TURBINES**
STEUERUNG FÜR ELEKTRISCH UNTERSTÜTZTE TURBINEN
COMMANDE POUR TURBINES À ASSISTANCE ÉLECTRIQUE

(30) Priority: 13.08.2021 US 202117402483
(43) Date of publication of application: 15.02.2023
(73) Proprietor: PRATT & WHITNEY CANADA CORP., Longueuil, Québec J4G 1A1 (CA)
(72) Inventor: FREER, Richard, Saint-Basile-Le-Grand, J3N 1X1 (CA)
(74) Representative: Dehns

(56) References cited:
- US-A1- 2018 354 631
- US-A1- 2021 172 384

## Description

### TECHNICAL FIELD

The present disclosure relates to electrically-assisted acceleration of aircraft.

### BACKGROUND

There is always a need in the art for improvements to electric propulsion in the aerospace industry.

A prior art method having the features of the preamble of claim 1 is disclosed in US 2021/172384 A1.

### SUMMARY

In accordance with an aspect of the present invention, there is provided a method of accelerating a gas turbine engine in accordance with claim 1.

In certain embodiments, controlling fuel flow to the plurality of fuel injectors includes maintaining engine core acceleration below a predetermined limit for compressor acceleration for a compressor section of the gas turbine engine.

In certain embodiments, controlling fuel flow to the plurality of fuel injectors includes maintaining an acceleration of the core below a predetermined limit for P3/P1 ratio, where P3 is compressor discharge pressure for the gas turbine engine and P1 is ambient pressure for the gas turbine engine.

In accordance with yet another aspect of the present invention, there is provided an electrical assist system for an aircraft gas turbine engine in accordance with claim 4.

In certain embodiments, controlling fuel flow to the plurality of fuel injectors includes maintaining an engine core acceleration below a predetermined limit for compressor acceleration for the compressor section. In certain embodiments, controlling fuel flow to the plurality of fuel injectors includes maintaining an acceleration of the engine core below a predetermined limit for a P3/P1 ratio, where P3 is compressor discharge pressure for the gas turbine engine and P1 is ambient pressure for the gas turbine engine.

In embodiments, the engine core further includes a high pressure core operatively connecting a high pressure turbine of the turbine section to drive a high pressure compressor of the compressor section. A low pressure core connects a low pressure turbine of the turbine section to drive a low pressure compressor of the compressor section. In certain such embodiments, the electric machine can be operatively connected to at least one of the high pressure core and/or the low pressure core. In certain embodiments, the electric machine includes a plurality of electric machines and the plurality of electric machines can be operatively connected to both the high pressure core and the low pressure core.

According to the invention, a feedback control loop is used to control fuel flow to the plurality of fuel injectors based on torque feedback and rotational speed feedback from the electric machine. In certain embodiments, the feedback control loop includes a power sensor electrically connected to the electric machine to sense voltage and current of power supplied to the electric machine so that the control module is operable to control fuel flow based on feedback from the power sensor.

In certain embodiments, the feedback control loop includes a speed sensor operatively connected to a rotatable component of the electric machine to sense rotation speed of the electric machine so that the control module is operable to control fuel flow based on feedback from the speed sensor. In certain embodiments, the feedback control loop includes, at least one of: a rotational speed sensor operatively connected to the engine core, an ambient pressure sensor, and/or a compressor discharge pressure sensor so that the control module is operable to control fuel flow based on feedback from the at least one of the rotational speed sensor, the ambient pressure sensor, and/or the compressor discharge pressure sensor.

In embodiments, a fuel pump connects a fuel source in fluid communication with the plurality of fuel injectors, and the control module is operatively connected to control the fuel pump to control fuel flow to the plurality of fuel injectors. In certain embodiments, controlling fuel flow includes adding fuel flow until the electric machine reaches a torque target.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is schematic cross-sectional side elevation view an aircraft engine in accordance with this disclosure, showing a plurality of fuel components connecting a fuel source to a combustor; and
Fig. 2 is an schematic view of the engine of Fig. 1, showing an electric assist system.

### DETAILED DESCRIPTION

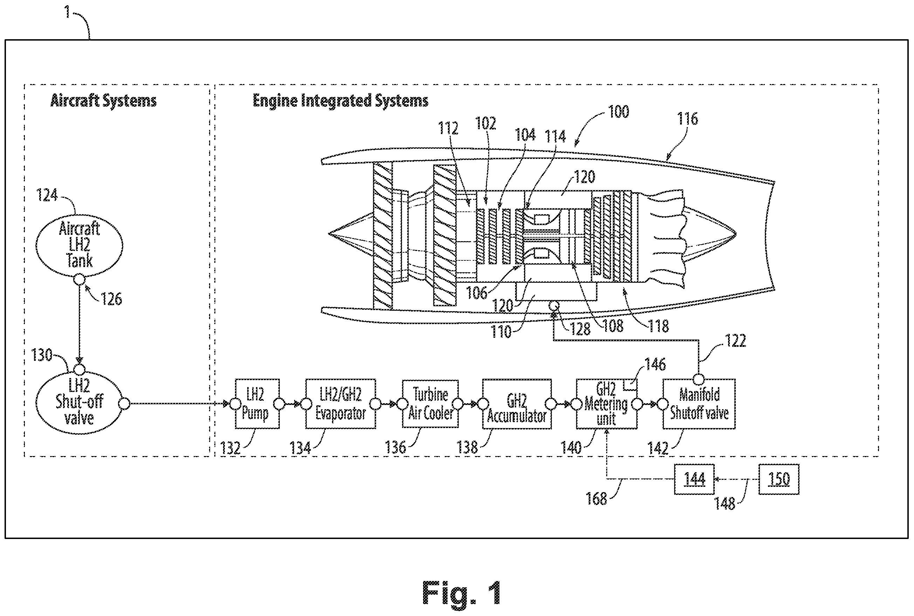

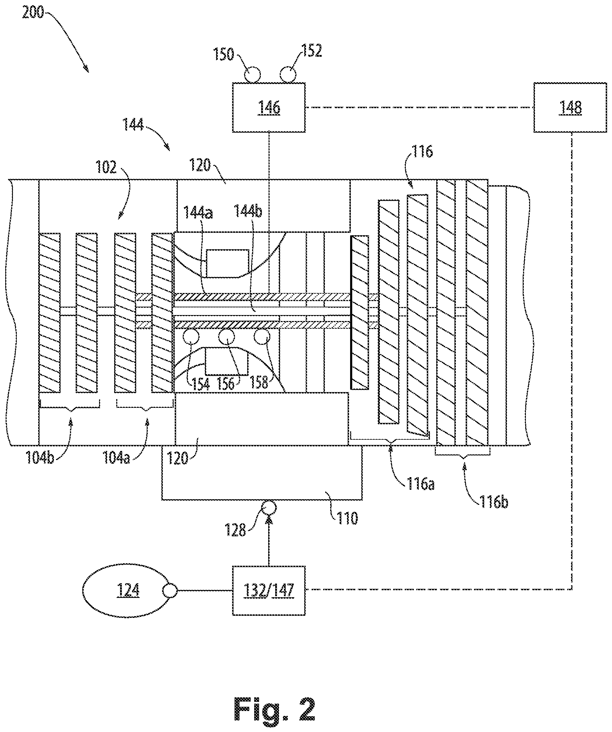

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Fig. 2. Certain embodiments described herein can be used to provide electric assist for turbine engines.

This disclosure relates generally to gas turbine engines, and more particularly to gas turbine engines with electrical motor assistance. In general, there is a limit to how fast a gas turbine engine core can accelerate by just increasing fuel flow to the fuel injectors. This limit can be increased by adding power to the engine core from an electrical motor. In order to control correctly control the electric motor assist, certain control algorithms are required. However, there is a need in the art for more reliable and robust control methods for electrically-assisted acceleration in the aerospace industry. For example, previous systems did not consider adjusting fuel supplied to the engine based on a known condition of the electric motor. This disclosure provides a solution for this need for example, by including both an electric motor control loop and an engine core fuel flow control loop to achieve the target engine speed.

In certain embodiments, referring to Fig. 1, an aircraft 1 can include an engine 100, where the engine 100 can be a propulsive energy engine (e.g. creating thrust for the aircraft 1), or a non-propulsive energy engine, and a fuel system. As described herein, the engine 100 is a turbofan engine, although the present disclosure may likewise be used with other engine types. The engine 100 includes a compressor section 102 having a compressor 104 in a primary gas path 106 to supply compressed air to a combustor 108 of the aircraft engine 100. The primary gas path 106 includes a nozzle manifold 110 for issuing fluid to the combustor 108.

The primary gas path 106 includes, in fluid communication in a series: the compressor 104 having an inlet 112, the combustor 108 fluidly connected to an outlet 114 of the compressor 104, and a turbine section 116 fluidly connected to an outlet 118 of the combustor 108. The turbine section 116 is operatively connected to the compressor 104 to drive the compressor 104.

The combustor 108 includes a plurality of fuel nozzles 120 each fluidly connected via a fuel feed conduit 122, which feeds the nozzle manifold 110, which feeds the plurality of fuel nozzles 120 of the combustor 108 with a gaseous fuel supply 124. The feed conduit 122 includes an inlet end 126 and an outlet end 128 to fluidly connect a fuel supply 124 to the combustor 108 through the plurality of fuel nozzles 120. In embodiments, the fuel supply 124 can be any suitable fuel, such as a gaseous pressure and/or temperature regulated fuel supply, which may be or include hydrogen gas.

Certain additional components may also be included in fluid communication between the combustor and the gaseous fuel supply in any suitable order or combination, such as a fuel shut off valve 130, a fuel pump 132, a liquid/gaseous fuel evaporator 134, a turbine air cooling heat exchanger 136, a gaseous fuel accumulator 138, a gaseous fuel metering unit 140, and/or a fuel manifold shut off valve 142.

Referring now to Fig. 2, in accordance with at least one aspect of this disclosure, there is provided an electrical assist system 200 for an aircraft gas turbine engine (e.g. engine 100). An engine core 144 extends through and operatively connects the compressor section 102 and the turbine section 116 so the turbine section 116 can drive the compressor section 102. In embodiments, the engine 100 is a dual-spool engine, and the engine core includes a high pressure core 144a operatively connecting a high pressure turbine 116a of the turbine section to drive a high pressure compressor 104a of the compressor section 102. A low pressure core 144b connects a low pressure turbine 116b of the turbine section 116 to drive a low pressure compressor 104b of the compressor section 102. It is contemplated the engine 100 can have any number of spools and engine cores for a given application, without departing from the scope of this disclosure. An electric machine 146 (e.g. an electric motor) is operatively connected to the engine core 144, for example to at least one of the high pressure core 144a, and/or the low pressure core 144b.

A fuel control mechanism 147 is disposed in the fuel feed conduit 122 to selectively control fuel flow from the fuel source 124 to the plurality of fuel nozzles 120. The fuel control mechanism 147 can be any suitable controllable fuel flow valve, or in certain embodiments, the fuel control mechanism 147 can be the fuel pump 132 itself where the control module 148 is operatively connected to control the fuel pump 132. The control module 148 is operatively connected the electric machine 146 and the fuel control mechanism 147 to control fuel flow to the plurality of fuel injectors 120 and to control the electric machine 146 based on feedback from a plurality of inputs using a feedback control loop.

For example, the fuel flow mechanism 147 can be controlled based on feedback from at least a power sensor 150 electrically connected to the electric machine 146 to sense voltage and current of power supplied to the electric machine 146 (e.g. via a generator) so that the control module 148 is operable to control fuel flow based on feedback from the power sensor 150. In certain embodiments, a speed sensor 152 is operatively connected to a rotatable component (e.g. a shaft or a rotor) of the electric machine 146 to sense the rotational speed of the electric machine 146 so that the control module 148 is operable to control fuel flow based on feedback from the speed sensor 152.

In certain embodiments, the electric machine 146 can have an individual electric machine controller, separate from the control module 148. In such embodiments, the fuel flow mechanism 147 can be controlled based on feedback from a torque estimate (derived from a torque sensor on the shaft of the electric machine) that is calculated by the electric machine controller and shared with the control module 148 through a data bus (e.g. a CANbus).

With continued reference to Fig. 2, in certain embodiments the electric machine 146 can be controlled based on feedback from at least one of a rotational speed sensor 154 that is operatively connected to the engine core 144 (e.g. either the high pressure core 144a or low pressure core 144b in a dual-spool engine, or the single core in a single spool engine), an ambient pressure sensor 156, and/or a compressor discharge pressure sensor 158. The sensors 154, 156, 158 can be operatively connected to the engine 100 and to the control module 148 so that the control module 148 is operable to control fuel flow based on feedback from the rotational speed sensor 154, the ambient pressure sensor 156, and/or the compressor discharge pressure sensor 158.

In certain embodiments, the control module 148 includes machine readable instructions operative to accelerate the engine core 144 based on the sensor inputs described above. According to the invention the control module 148 is operative to perform a method of accelerating the engine core 144, including adding torque to the engine core 144 to accelerate rotation of the engine core 144 by controlling fuel flow to the fuel injectors 120 based on feedback from the electric machine 146, and simultaneously adding torque to the engine core 144 by powering the electric machine 146.

Controlling fuel flow based on feedback from the electric machine 146 includes controlling fuel flow to achieve a target torque from the electric machine 146. As used herein a target torque can be any suitable torque for a given application, for example, a target value such as zero torque, or a target value that can be a positive value or a negative value. A slightly negative target torque can be a constant extract of a small amount of electrical power, and a slightly positive value can be a constant add of a small amount of electrical power. In certain embodiments, constant addition or extraction of power could be useful to tune engine performance for peak efficiency (e.g. transferring power between high spool and low spool), or in certain embodiments, the steady extraction of power could be used to recharge batteries gradually and/or provide electrical power to other power consuming electric devices.

In embodiments, the method includes maintaining an engine core acceleration below a predetermined limit for compressor acceleration for the compressor section 102, and/or maintaining an acceleration of the engine core 144 below a predetermined limit for a P3/P1 ratio (where P3 is compressor discharge pressure for the gas turbine engine and P1 is ambient pressure for the gas turbine engine as sensed by sensors 156 and 158 respectively). In embodiments, controlling fuel flow can include controlling the fuel flow mechanism 147 to allow fuel flow to continue to be added to the plurality of fuel nozzles 120 until the electric machine 146 reaches a torque target, whereby power to the electric machine 146 can be reduced or stopped all together.

Powering the electric machine 146 includes controlling the electric machine 146 based on the engine core speed feedback from the engine core 144 to reach a target core speed. Once the increased target speed is reached, the electric motor torque will be positive until the fuel flow is increased so that the turbine takes more of the compressor load and reduces the load on the electric machine 146. At that time, power to the electric machine 146 can be reduced or stopped all together and fuel flow to the plurality of fuel injectors 120 can be maintained.

In embodiments, the electric motor can be used to accelerate the engine core without being limited by surge limits because the motor does not rely on over-fueling to accelerate. In certain instances, this can allow the compressor run line to be set closer to the surge limit where its performance is better. Knowing the condition of the electric motor thus allows the control module to know if fuel flow should increase or decrease to off-load the electric motor. However, in embodiments, it is possible that the control module does not need to change fuel flow rapidly, though rapid fuel flow change may occur because the electric motor acceleration would have put the core into an under-fueled state temporarily. Accordingly, as long as electric motor torque is positive, the fuel flow can be increased more rapidly than may otherwise be the case. The rate of change in fuel flow will therefore depend on how quickly the electric motor can accelerate the core and knowing the torque can indicate whether the fuel flow can be further increased without surge.

As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the appended claims.

## Claims

1. A method of accelerating a gas turbine engine (100) of an aircraft (1), comprising:
adding torque to a core (144) of the gas turbine engine (100) to accelerate rotation of the core (144) by controlling fuel flow to a plurality of fuel injectors (120) of the gas turbine engine (100); and
adding torque to the core (144) by powering an electric machine (146) that is operatively connected to the core (144) to drive the core (144),
**characterized in that**:
the controlling fuel flow to the plurality of fuel injectors is based on feedback from the electric machine (146) including a torque feedback and a rotational speed feedback;
powering the electric machine (146) includes controlling the electric machine (146) based on an engine core speed feedback from the core (144) to reach a target core speed of the core (144); and
the controlling fuel flow based on feedback from the electric machine (146) includes controlling fuel flow to achieve a target torque generated by the electric machine (146).

2. The method as recited in claim 1, wherein the controlling fuel flow to the plurality of fuel injectors (120) includes maintaining engine core acceleration below a predetermined limit for compressor acceleration for a compressor section (102) of the gas turbine engine (100).

3. The method as recited in claim 1 or 2, wherein the controlling fuel flow to the plurality of fuel injectors (120) includes maintaining an acceleration of the core (144) below a predetermined limit for P3/P1 ratio, wherein P3 is compressor discharge pressure for the gas turbine engine (100), and wherein P1 is ambient pressure for the gas turbine engine (100).

4. An electrical assist system (200) for an aircraft (1), comprising:
a gas turbine engine (100) including:
a compressor section (102) having an inlet (112) and an outlet (114);
a combustor (108) having an inlet and an outlet (118), wherein the inlet of the combustor (108) is in fluid communication with the outlet (114) of the compressor section (102);
a turbine section (116) having an inlet and an outlet, wherein the inlet of the turbine section (116) is in fluid communication with the outlet (118) of the combustor (108);
an engine core (144) extending through and operatively connecting the compressor section (102) and the turbine section (116); and
a plurality of fuel injectors (120) fluidly connected to issue fuel into the combustor (108) for combustion;
an electric machine (146) operatively connected to the engine core (144); and
a control module (148) operatively connected to control fuel flow to the plurality of fuel injectors (120) and to control the electric machine (146) based on feedback from at least one of: the compressor section (102), the engine core (144), the turbine section (116), and/or the combustor (108),
wherein the control module (148) includes machine readable instructions operative to:
perform acceleration of the engine core (144);
add torque to the engine core (144) to accelerate rotation of the engine core (144) by controlling fuel flow to the plurality of fuel injectors (120) of the gas turbine engine (100); and
add torque to the engine core (144) by powering the electric machine (146), **characterized in that**:
the system comprises a feedback control loop wherein the torque feedback and rotational speed feedback from the electric machine (146) are used to control fuel flow to the plurality of fuel injectors (120);
powering the electric machine (146) includes controlling the electric machine (146) based on an engine core speed feedback from the core (144) to reach a target core speed of the core (144); and
the controlling fuel flow based on feedback from the electric machine (146) includes controlling fuel flow to achieve a target torque generated by the electric machine (146).

5. The system as recited in claim 4, wherein the controlling fuel flow to the plurality of fuel injectors (120) includes maintaining an engine core acceleration below a predetermined limit for compressor acceleration for the compressor section (102).

6. The system as recited in claim 4 or 5, wherein the controlling fuel flow to the plurality of fuel injectors (120) includes maintaining an acceleration of the engine core (144) below a predetermined limit for a P3/P1 ratio, wherein P3 is compressor discharge pressure for the gas turbine engine (100), and wherein P1 is ambient pressure for the gas turbine engine (100).

7. The system as recited in claim 4, 5 or 6, wherein the engine core (144) further includes:
a high pressure core (144a) operatively connecting a high pressure turbine (116a) of the turbine section (116) to drive a high pressure compressor (104a) of the compressor section (102); and
a low pressure core (144b) operatively connecting a low pressure turbine (116b) of the turbine section (116) to drive a low pressure compressor (104b) of the compressor section (102), wherein the electric machine (146) is operatively connected to at least one of the high pressure core (144a) and/or the low pressure core (144b).

8. The system as recited in claim 7, wherein the electric machine (146) includes a plurality of electric machines (146) operatively connected to both the high pressure core (144a) and the low pressure core (144b).

9. The system as recited in any of claims 4 to 8, wherein the feedback control loop includes a power sensor (150) electrically connected to the electric machine (146) to sense voltage and current of power supplied to the electric machine (146), wherein the control module (148) is operable to control fuel flow based on feedback from the power sensor (150).

10. The system as recited in any of claims 4 to 9, wherein the feedback control loop includes a speed sensor (152) operatively connected to a rotatable component of the electric machine (146) to sense rotation speed of the electric machine (146), wherein the control module (148) is operable to control fuel flow based on feedback from the speed sensor (152).

11. The system as recited in any of claims 4 to 10, wherein the feedback control loop further includes, at least one: of a rotational speed sensor (154) operatively connected to the engine core (144), an ambient pressure sensor (156), and/or a compressor discharge pressure sensor (158), wherein the control module (148) is operable to control fuel flow based on feedback from the at least one of the rotational speed sensor (154), the ambient pressure sensor (156), and/or the compressor discharge pressure sensor (158).

12. The system as recited in any of claims 4 to 11, further comprising a fuel pump (132) connecting a fuel source (124) in fluid communication with the plurality of fuel injectors (120), wherein the control module (148) is operatively connected to control the fuel pump (132) to control fuel flow to the plurality of fuel injectors (120).

13. The system as recited in any of claims 4 to 12, wherein the controlling fuel flow includes adding fuel flow until the electric machine (146) reaches the target torque.

## Patentansprüche

1. Verfahren zum Beschleunigen eines Gasturbinentriebwerks (100) eines Luftfahrzeugs (1), umfassend:
Hinzufügen von Drehmoment zu einem Kern (144) des Gasturbinentriebwerks (100), um eine Drehung des Kerns (144) durch Steuern eines Kraftstofffluss zu einer Vielzahl von Kraftstoffeinspritzdüsen (120) des Gasturbinentriebwerks (100) zu beschleunigen; und
Hinzufügen von Drehmoment zu dem Kern (144) durch Versorgen einer elektrischen Maschine (146) mit Leistung, die mit dem Kern (144) wirkverbunden ist, um den Kern (144) anzutreiben,
**dadurch gekennzeichnet, dass**:
das Steuern des Kraftstoffflusses zu der Vielzahl von Kraftstoffeinspritzdüsen auf einer Rückmeldung von der elektrischen Maschine (146) basiert, die eine Drehmomentrückmeldung und eine Drehzahlrückmeldung beinhaltet;
das Versorgen der elektrischen Maschine (146) mit Leistung Steuern der elektrischen Maschine (146) basierend auf einer Triebwerkskerngeschwindigkeitsrückmeldung von dem Kern (144) beinhaltet, um eine Zielkerngeschwindigkeit des Kerns (144) zu erreichen; und
das Steuern des Kraftstoffflusses basierend auf einer Rückmeldung von der elektrischen Maschine (146) Steuern des Kraftstoffflusses beinhaltet, um ein von der elektrischen Maschine (146) erzeugtes Zieldrehmoment zu erzielen.

2. Verfahren nach Anspruch 1, wobei das Steuern des Kraftstoffflusses zu der Vielzahl von Kraftstoffeinspritzdüsen (120) Aufrechterhalten der Triebwerkskernbeschleunigung unterhalb eines vorbestimmten Grenzwertes für die Verdichterbeschleunigung für einen Verdichterabschnitt (102) des Gasturbinentriebwerks (100) beinhaltet.

3. Verfahren nach Anspruch 1 oder 2, wobei das Steuern des Kraftstoffflusses zu der Vielzahl von Kraftstoffeinspritzdüsen (120) Aufrechterhalten einer Beschleunigung des Kerns (144) unterhalb eines vorbestimmten Grenzwertes für das P3/P1-Verhältnis beinhaltet, wobei P3 der Verdichterausstoßdruck für das Gasturbinentriebwerk (100) ist und wobei P1 der Umgebungsdruck für das Gasturbinentriebwerk (100) ist.

4. Elektrisches Unterstützungssystem (200) für ein Luftfahrzeug (1), umfassend:
ein Gasturbinentriebwerk (100), beinhaltend:
einen Verdichterabschnitt (102) mit einem Einlass (112) und einem Auslass (114);
eine Brennkammer (108) mit einem Einlass und einem Auslass (118), wobei der Einlass der Brennkammer (108) in Fluidverbindung mit dem Auslass (114) des Verdichterabschnitts (102) steht;
einen Turbinenabschnitt (116) mit einem Einlass und einem Auslass, wobei der Einlass des Turbinenabschnitts (116) in Fluidverbindung mit dem Auslass (118) der Brennkammer (108) steht;
einen Triebwerkskern (144), der sich durch den Verdichterabschnitt (102) und den Turbinenabschnitt (116) erstreckt und diese wirkverbindet; und
eine Vielzahl von Kraftstoffeinspritzdüsen (120), die fluidverbunden sind, um Kraftstoff zur Verbrennung in die Brennkammer (108) abzugeben;
eine elektrische Maschine (146), die mit dem Triebwerkskern (144) wirkverbunden ist; und
ein Steuermodul (148), das wirkverbunden ist, um den Kraftstofffluss zu der Vielzahl von Kraftstoffeinspritzdüsen (120) zu steuern und die elektrische Maschine (146) basierend auf einer Rückmeldung von mindestens einem der Folgenden zu steuern: dem Verdichterabschnitt (102), dem Triebwerkskern (144), dem Turbinenabschnitt (116) und/oder der Brennkammer (108),
wobei das Steuermodul (148) maschinenlesbare Anweisungen beinhaltet, die zu Folgendem dienen:
Durchführen einer Beschleunigung des Triebwerkskerns (144);
Hinzufügen von Drehmoment zu dem Triebwerkskern (144), um die Drehung des Triebwerkskerns (144) durch Steuern des Kraftstofffluss zu der Vielzahl von Kraftstoffeinspritzdüsen (120) des Gasturbinentriebwerks (100) zu beschleunigen; und Hinzufügen von Drehmoment zu dem Triebwerkskern (144) durch Versorgen der elektrischen Maschine (146) mit Leistung, **dadurch gekennzeichnet, dass**:
das System einen Rückmeldungssteuerkreis umfasst, wobei die Drehmomentrückmeldung und die Drehzahlrückmeldung von der elektrischen Maschine (146) verwendet werden, um den Kraftstofffluss zu der Vielzahl von Kraftstoffeinspritzdüsen (120) zu steuern;
das Versorgen der elektrischen Maschine (146) mit Leistung Steuern der elektrischen Maschine (146) basierend auf einer Triebwerkskerngeschwindigkeitsrückmeldung von dem Kern (144) beinhaltet, um eine Zielkerngeschwindigkeit des Kerns (144) zu erreichen; und
das Steuern des Kraftstoffflusses basierend auf einer Rückmeldung von der elektrischen Maschine (146) Steuern des Kraftstoffflusses beinhaltet, um ein von der elektrischen Maschine (146) erzeugtes Zieldrehmoment zu erzielen.

5. System nach Anspruch 4, wobei das Steuern des Kraftstoffflusses zu der Vielzahl von Kraftstoffeinspritzdüsen (120) Aufrechterhalten einer Triebwerkskernbeschleunigung unterhalb eines vorbestimmten Grenzwertes für die Verdichterbeschleunigung für den Verdichterabschnitt (102) beinhaltet.

6. System nach Anspruch 4 oder 5, wobei das Steuern des Kraftstoffflusses zu der Vielzahl von Kraftstoffeinspritzdüsen (120) Aufrechterhalten einer Beschleunigung des Triebwerkskerns (144) unterhalb eines vorbestimmten Grenzwertes für ein P3/P1-Verhältnis beinhaltet, wobei P3 der Verdichterausstoßdruck für das Gasturbinentriebwerk (100) ist und wobei P1 der Umgebungsdruck für das Gasturbinentriebwerk (100) ist.

7. System nach Anspruch 4, 5 oder 6, wobei der Triebwerkskern (144) ferner Folgendes beinhaltet:
einen Hochdruckkern (144a), der eine Hochdruckturbine (116a) des Turbinenabschnitts (116) wirkverbindet, um einen Hochdruckverdichter (104a) des Verdichterabschnitts (102) anzutreiben; und
einen Niederdruckkern (144b), der eine Niederdruckturbine (116b) des Turbinenabschnitts (116) wirkverbindet, um einen Niederdruckverdichter (104b) des Verdichterabschnitts (102) anzutreiben, wobei die elektrische Maschine (146) mit mindestens einem des Hochdruckkerns (144a) und/oder des Niederdruckkerns (144b) wirkverbunden ist.

8. System nach Anspruch 7, wobei die elektrische Maschine (146) eine Vielzahl von elektrischen Maschinen (146) beinhaltet, die sowohl mit dem Hochdruckkern (144a) als auch mit dem Niederdruckkern (144b) wirkverbunden sind.

9. System nach einem der Ansprüche 4 bis 8, wobei der Rückmeldungssteuerkreis einen Leistungssensor (150) beinhaltet, der elektrisch mit der elektrischen Maschine (146) verbunden ist, um Spannung und Stromstärke der an die elektrische Maschine (146) gelieferten Leistung zu erfassen, wobei das Steuermodul (148) dazu betreibbar ist, den Kraftstofffluss basierend auf der Rückmeldung von dem Leistungssensor (150) zu steuern.

10. System nach einem der Ansprüche 4 bis 9, wobei der Rückmeldungssteuerkreis einen Geschwindigkeitssensor (152) beinhaltet, der mit einer drehbaren Komponente der elektrischen Maschine (146) wirkverbunden ist, um eine Drehgeschwindigkeit der elektrischen Maschine (146) zu erfassen, wobei das Steuermodul (148) dazu betreibbar ist, den Kraftstofffluss basierend auf der Rückmeldung von dem Geschwindigkeitssensor (152) zu steuern.

11. System nach einem der Ansprüche 4 bis 10, wobei der Rückmeldungssteuerkreis ferner mindestens einen der Folgenden beinhaltet: einen Drehzahlsensor (154), der mit dem Triebwerkskern (144) wirkverbunden ist, einen Umgebungsdrucksensor (156) und/oder einen Verdichterausstoßdrucksensor (158), wobei das Steuermodul (148) dazu betreibbar ist, den Kraftstofffluss basierend auf der Rückmeldung von mindestens einem des Drehzahlsensors (154), des Umgebungsdrucksensors (156) und/oder des Verdichterausstoßdrucksensors (158) zu steuern.

12. System nach einem der Ansprüche 4 bis 11, ferner umfassend eine Kraftstoffpumpe (132), die eine Kraftstoffquelle (124) in Fluidverbindung mit der Vielzahl von Kraftstoffeinspritzdüsen (120) verbindet, wobei das Steuermodul (148) wirkverbunden ist, um die Kraftstoffpumpe (132) zu steuern, um den Kraftstofffluss zu der Vielzahl von Kraftstoffeinspritzdüsen (120) zu steuern.

13. System nach einem der Ansprüche 4 bis 12, wobei das Steuern des Kraftstoffflusses Hinzufügen eines Kraftstoffflusses, bis die elektrische Maschine (146) das Zieldrehmoment erreicht, beinhaltet.

## Revendications

1. Procédé d'accélération d'un moteur à turbine à gaz (100) d'un aéronef (1), comprenant :
l'ajout d'un couple à un noyau (144) du moteur à turbine à gaz (100) pour accélérer la rotation du noyau (144) en contrôlant le débit de carburant vers une pluralité d'injecteurs de carburant (120) du moteur à turbine à gaz (100) ; et
l'ajout d'un couple au noyau (144) en alimentant une machine électrique (146) qui est connectée de manière opérationnelle au noyau (144) pour entraîner le noyau (144),
**caractérisé en ce que** :
le contrôle du débit de carburant vers la pluralité d'injecteurs de carburant est basé sur une rétroaction de la machine électrique (146) incluant une rétroaction de couple et une rétroaction de vitesse de rotation ;
l'alimentation de la machine électrique (146) inclut la commande de la machine électrique (146) sur la base d'une rétroaction de vitesse du noyau du moteur provenant du noyau (144) pour atteindre une vitesse de noyau cible du noyau (144) ; et
le contrôle du débit de carburant sur la base d'une rétroaction de la machine électrique (146) inclut le contrôle du débit de carburant pour atteindre un couple cible généré par la machine électrique (146).

2. Procédé selon la revendication 1, dans lequel le contrôle du débit de carburant vers la pluralité d'injecteurs de carburant (120) inclut le maintien de l'accélération du noyau du moteur en dessous d'une limite prédéterminée pour l'accélération du compresseur pour une section de compresseur (102) du moteur à turbine à gaz (100).

3. Procédé selon la revendication 1 ou 2, dans lequel le contrôle du débit de carburant vers la pluralité d'injecteurs de carburant (120) inclut le maintien d'une accélération du noyau (144) en dessous d'une limite prédéterminée pour le rapport P3/P1, dans lequel P3 est la pression de refoulement du compresseur pour le moteur à turbine à gaz (100), et dans lequel P1 est la pression ambiante pour le moteur à turbine à gaz (100).

4. Système d'assistance électrique (200) pour un aéronef (1), comprenant :
un moteur à turbine à gaz (100) incluant :
une section de compresseur (102) ayant une entrée (112) et une sortie (114) ;
une chambre de combustion (108) comportant une entrée et une sortie (118), dans laquelle l'entrée de la chambre de combustion (108) est en communication fluidique avec la sortie (114) de la section de compresseur (102) ;
une section de turbine (116) ayant une entrée et une sortie, dans laquelle l'entrée de la section de turbine (116) est en communication fluidique avec la sortie (118) de la chambre de combustion (108) ;
un noyau de moteur (144) se prolongeant à travers et reliant de manière opérationnelle la section de compresseur (102) et la section de turbine (116) ; et
une pluralité d'injecteurs de carburant (120) reliés fluidiquement pour délivrer du carburant dans la chambre de combustion (108) pour la combustion ;
une machine électrique (146) reliée de manière opérationnelle au noyau du moteur (144) ; et
un module de commande (148) connecté de manière opérationnelle pour contrôler le débit de carburant vers la pluralité d'injecteurs de carburant (120) et pour commander la machine électrique (146) sur la base d'une rétroaction provenant au moins de l'un/l'une : de la section de compresseur (102), du noyau du moteur (144), de la section de turbine (116) et/ou de la chambre de combustion (108),
dans lequel le module de commande (148) inclut des instructions lisibles par une machine permettant :
d'effectuer une accélération du noyau du moteur (144) ;
d'ajouter un couple au noyau du moteur (144) pour accélérer la rotation du noyau du moteur (144) en contrôlant le débit de carburant vers la pluralité d'injecteurs de carburant (120) du moteur à turbine à gaz (100) ; et
d'ajouter un couple au noyau du moteur (144) en alimentant la machine électrique (146), **caractérisé en ce que** :
le système comprend une boucle de contrôle de rétroaction dans laquelle la rétroaction de couple et la rétroaction de vitesse de rotation de la machine électrique (146) sont utilisées pour contrôler le débit de carburant vers la pluralité d'injecteurs de carburant (120) ;
l'alimentation de la machine électrique (146) inclut la commande de la machine électrique (146) sur la base d'une rétroaction de vitesse du noyau du moteur provenant du noyau (144) pour atteindre une vitesse de noyau cible du noyau (144) ; et
le contrôle du débit de carburant sur la base d'une rétroaction de la machine électrique (146) inclut le contrôle du débit de carburant pour atteindre un couple cible généré par la machine électrique (146).

5. Système selon la revendication 4, dans lequel le contrôle du débit de carburant vers la pluralité d'injecteurs de carburant (120) inclut le maintien d'une accélération du noyau du moteur en dessous d'une limite prédéterminée pour l'accélération du compresseur pour la section de compresseur (102).

6. Système selon la revendication 4 ou 5, dans lequel le contrôle du débit de carburant vers la pluralité d'injecteurs de carburant (120) inclut le maintien **d'une** accélération du noyau du moteur (144) en dessous d'une limite prédéterminée pour un rapport P3/P1, dans lequel P3 est la pression de refoulement du compresseur pour le moteur à turbine à gaz (100), et dans lequel P1 est la pression ambiante pour le moteur à turbine à gaz (100).

7. Système selon la revendication 4, 5 ou 6, dans lequel le noyau de moteur (144) inclut également :
un noyau haute pression (144a) reliant de manière opérationnelle une turbine haute pression (116a) de la section de turbine (116) pour entraîner un compresseur haute pression (104a) de la section de compresseur (102) ; et
un noyau basse pression (144b) reliant de manière opérationnelle une turbine basse pression (116b) de la section de turbine (116) pour entraîner un compresseur basse pression (104b) de la section de compresseur (102), dans lequel la machine électrique (146) est reliée de manière opérationnelle à au moins l'un du noyau haute pression (144a) et/ou du noyau basse pression (144b).

8. Système selon la revendication 7, dans lequel la machine électrique (146) inclut une pluralité de machines électriques (146) reliées de manière opérationnelle à la fois au noyau haute pression (144a) et au noyau basse pression (144b).

9. Système selon l'une quelconque des revendications 4 à 8, dans lequel la boucle de commande de rétroaction inclut un capteur de puissance (150) connecté électriquement à la machine électrique (146) pour détecter la tension et le courant de puissance fournis à la machine électrique (146), dans lequel le module de commande (148) permet de fonctionner pour commander le débit de carburant sur la base de la rétroaction du capteur de puissance (150).

10. Système selon l'une quelconque des revendications 4 à 9, dans lequel la boucle de commande de rétroaction inclut un capteur de vitesse (152) connecté de manière opérationnelle à un composant rotatif de la machine électrique (146) pour détecter la vitesse de rotation de la machine électrique (146), dans lequel le module de commande (148) permet de fonctionner pour contrôler le débit de carburant sur la base de la rétroaction du capteur de vitesse (152).

11. Système selon l'une quelconque des revendications 4 à 10, dans lequel la boucle de commande de rétroaction inclut également au moins l'un d'un capteur de vitesse de rotation (154) connecté de manière opérationnelle au noyau du moteur (144), d'un capteur de pression ambiante (156) et/ou d'un capteur de pression de refoulement du compresseur (158), dans lequel le module de commande (148) permet de contrôler le débit de carburant sur la base de la rétroaction provenant au moins de l'un du capteur de vitesse de rotation (154), du capteur de pression ambiante (156) et/ou du capteur de pression de refoulement du compresseur (158).

12. Système selon l'une quelconque des revendications 4 à 11, comprenant également une pompe à carburant (132) reliant une source de carburant (124) en communication fluidique avec la pluralité d'injecteurs de carburant (120), dans lequel le module de commande (148) est connecté de manière opérationnelle pour commander la pompe à carburant (132) afin de contrôler le débit de carburant vers la pluralité d'injecteurs de carburant (120).

13. Système selon l'une quelconque des revendications 4 à 12, dans lequel le contrôle du débit de carburant inclut l'ajout de débit de carburant jusqu'à ce que la machine électrique (146) atteigne le couple cible.
